(19) Europäisches Patentamt
European Patent Office
Office européen des brevets

(11) **EP 0 641 123 B1**

(12) **EUROPEAN PATENT SPECIFICATION**

(45) Date of publication and mention
of the grant of the patent:
**02.04.1997 Bulletin 1997/14**

(51) Int Cl.6: **H04N 5/232**

(21) Application number: **94113091.6**

(22) Date of filing: **23.08.1994**

(54) **Image movement compensation apparatus**

Vorrichtung zur Bewegungskompensation eines Bildes

Dispositif pour la correction du mouvement d'une image

(84) Designated Contracting States:
**DE FR GB**

(30) Priority: **25.08.1993 JP 210158/93**

(43) Date of publication of application:
**01.03.1995 Bulletin 1995/09**

(73) Proprietor: **MATSUSHITA ELECTRIC INDUSTRIAL CO., LTD.**
**Kadoma-shi, Osaka-fu, 571 (JP)**

(72) Inventors:
• **Kusaka, Hiroya**
**Ashiya-shi, Hyogo-ken 659 (JP)**
• **Shigemori, Michiko**
**Hirakata-shi, Osaka-fu 573 (JP)**

(74) Representative: **Eisenführ, Speiser & Partner**
**Martinistrasse 24**
**28195 Bremen (DE)**

(56) References cited:
**EP-A- 0 393 823          EP-A- 0 481 230**
**US-A- 5 204 741**

• **IEEE TRANSACTIONS ON CONSUMER ELECTRONICS, vol.36, no.3, August 1990, NEW-YORK (US) pages 520 - 525 KINUGASA ET AL. 'ELECTRONIC IMAGE STABILISER FOR VIDEO CAMERA USE'**
• **IEEE TRANSACTIONS ON CONSUMER ELECTRONICS, vol.36, no.3, August 1990, NEW-YORK (US) pages 510 - 519 UOMORI ET AL. 'AUTOMATIC IMAGE STABILIZING SYSTEM BY FULL-DIGITAL SIGNAL PROCESSING'**

# Description

The present invention relates to an image movement compensation apparatus for compensating the movement of an image representing an object, said apparatus comprising: a video signal producing means for producing a first image of said object expressed by a first predetermined number of pixels and reading out a second image from said first image to produce a first video signal, said second image being expressed by a second predetermined number smaller than said first predetermined number of pixels; a memory means for storing said first video signal; an image movement detecting means for detecting the movement of said second image at intervals of a predetermined period and producing a movement vector signal; a first control means for controlling said memory means to read out a third image from said second image and producing a second video signal, said third image being expressed by a third predetermined number smaller than said second predetermined number of pixels; and a second control means for controlling said image signal producing means to change the address from which said second image are read out.

This image movement compensation apparatus is being used to compensate for handmovement of the image recording apparatus during recording.

When subjects are imaged using an image recording apparatus that is held by hand or is mounted on a moving body such as a motor vehicle, movement of the image recording apparatus during recording also appears in the recorded image. Image movement compensation, also known as image stabilization, apparatuses that detect this image movement and adjust the recorded image position based on the detected movement information have therefore been developed and are today commonly available in consumer products.

Such a conventional image movement compensation apparatus has been described in "Electronic Image Stabilizer for Video Camera Use" (T. Kinugasa, et al., IEEE Transactions on Consumer Electronics, Vol. 36, No. 3, August 1990 (pp. 520 - 525)).

Another conventional image movement compensation apparatus is disclosed in "Automatic Image Stabilizing System by Full-Digital Signal Processing" (K. Uomori, et al., IEEE Transactions on Consumer Electronics, Vol. 36, No. 3, August 1990 (pp. 510 - 519)).

In the "Automatic Image Stabilizing System by Full-Digital Signal Processing" described by K. Uomori et al., image movement is detected from the video signal of the current field obtained from a solid-state image pick-up device, and image movement caused by hand movement or other cause is removed from the current field image by shifting the field memory data read address according to the detected image movement. Electronic zoom processing is also applied at this time because the size of the image frame changes when reading the image signal from the field memory.

T. Kinugasa, et al., described two different methods in "Electronic Image Stabilizer for Video Camera Use." In the first, image movement is detected from the video signal of the current field obtained from a solid-state image pick-up device, and image movement caused by hand movement or other cause is removed by shifting the position from which the video signal is read from the solid-state image pick-up device in the next field according to the detected movement. The compensation function of this first system, however, does not work well with image movement caused by high frequency hand movement, and the second system described therefore provides a buffer memory. A motion detection means detects residual hand movement in the image read from the solid-state image pick-up device to control image reading from the buffer memory and thereby correct this residual movement.

In the system described by K. Uomori et al., however, it is necessary to electronically enlarge the image because the movement compensation process makes the image frame of the compensated image smaller than that of the original image read from the field memory circuit. The problem here is that this electronic enlarging process degrades the image quality.

Furthermore, in the first system described by T. Kinugasa et al., high precision movement compensation is not possible because controlling the video signal read position of the solid-state image pick-up device is based on the detection results obtained from the previous field, and movement compensation is thus delayed by one field. In addition, both systems described by T. Kinugasa et al., rely on reading the video signal from either the solid-state image pick-up device or buffer memory for movement compensation. As a result, the best compensation precision is limited to one pixel horizontally or one line vertically even if the motion detection precision is better than one pixel horizontally or one line vertically, and more precise compensation is not possible.

The object of the present invention is therefore to provide an improved image movement compensation apparatus which particularily solves the above described disadvantages.

In order to achieve the aforementioned objective, an image movement compensation apparatus for compensating the movement of an image representing an object comprises: a video signal producing means for producing a first image of said object expressed by a first predetermined number of pixels and reading out a second image from said first image to produce a first video signal, said second image being expressed by a second predetermined number smaller than said first predetermined number of pixels; a memory means for storing said first video signal; an image movement detecting means for detecting the movement of said second image at intervals of a predetermined period and producing a movement vector signal; a first control mean for controlling said memory means to read out a third image from said second image and producing a second video signal, said third image being expressed by a third predetermined number smaller than said second predetermined number of pixels; a second control means for controlling said image signal producing means to change the address from which said second image are read out; an integrating means for integrating said movement vector signal and producing an integrated movement vector signal; and an image movement prediction means for predicting the movement which said second image at intervals of said predetermind period based on said movement vector signal and producing a movement prediction signal; said first control means reading out said third image from said second image based on said integrated movement vector signal; and said second control means changing the address from which said second image are read out based on said movement prediction signal.

These and other objects and features of the present invention will become clear from the following description taken in conjunction with the preferred embodiments thereof with reference to the accompanying drawings throughout which like parts are designated by like reference numerals, and in which:

Fig. 1 is a block diagram showing an image movement compensation apparatus according to a first embodiment of the present invention;

Fig. 2 is a block diagram showing an image movement predictor of the image movement compensation apparatus of Fig. 1;

Fig. 3 is a block diagram showing a modification of the image movement predictor of Fig. 2;

Fig. 4 is a block diagram showing a detailed construction of the image movement predictor of Fig. 2;

Fig. 5 is a block diagram showing a modification of the movement predictor of Fig. 4;

Fig. 6 is a block diagram showing an image interpolator of the image movement compensation apparatus of Fig. 1;

Figs. 7A, 7B, 7C, and 7D are illustrations of assistance in explaining the sizes of images obtained in am image pick-up device, a field memory, and the final output image according to the present invention;

Fig. 8 is an illustration of assistance in explaining the image movement compensation operation according to the present invention;

Figs. 9A, 9B, and 9C are graphs of assistance in explaining the operation of the movement predictor shown in Fig. 4;

Figs. 10A, 10B, and 10C are graphs of assistance in explaining the operation of the movement predictor shown in Fig. 5;

Fig. 11 is an illustration of assistance in explaining the operation of the image interpolator of Fig. 6;

Fig. 12 is a block diagram showing an image movement compensation apparatus according to a second embodiment of the present invention;

Fig. 13 is a block diagram showing an image movement predictor shown in Fig. 12; and

Fig. 14 is a block diagram showing a attenuation compensator of the image movement compensation apparatus of Fig. 12.

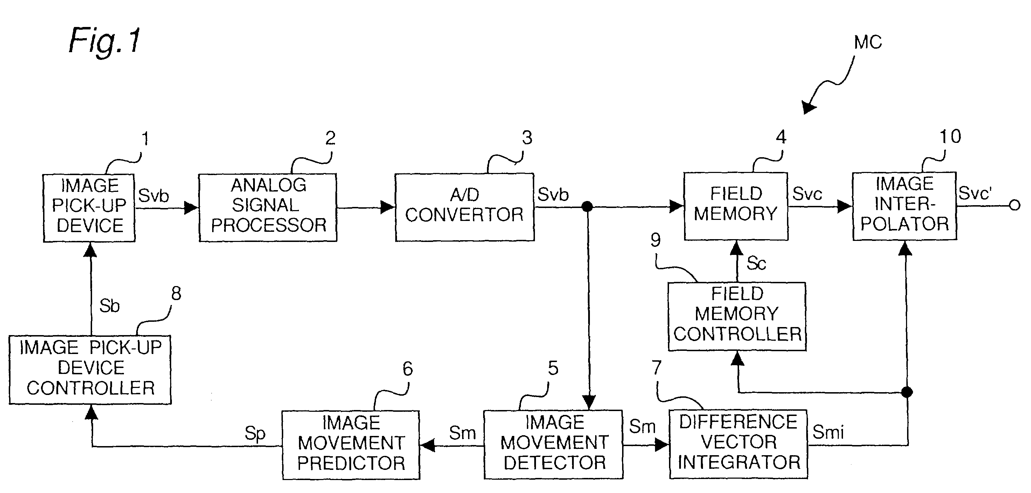

Referring to Fig. 1, an image movement compensation apparatus according to a first embodiment of the present invention is shown. The image movement compensation apparatus MC includes an image pick-up device 1 for converting optical images received through a lens system to electronic images, i.e., a video signal Svb. The image pick-up device 1 has more pixels than a conventional image pick-up device of which the number of pixels is determined according to the broadcast system or the system operating clock. The image pick-up device 1 can be made by, for example, a solid state element such as a CCD, but not limited to it.

An analog signal processor 2 is provided for applying analog signal processing to the video signal Svb from the image pick-up device 1. Thus analog processed signal is converted to a digital video signal Svb by the A/D convertor 3, and is then transferred to a field memory 4 and an image movement detector 5.

The field memory 4 has a storage capacity less than the number of pixels in the image pick-up device 1 and greater than the number of pixels required for the final video output from an image movement compensation apparatus MC. The field memory 4 temporarily stores the digitized video signal Svb.

The image movement detector 5 detects the movement in the image between consecutive image fields from the digitized video signal Svb and produces a detected difference vector signal Sm representing the image movement. The detected difference vector signal Sm is transferred to an image movement predictor 6 and a difference vector integrator 7.

Based on the detected difference vector signal Sm, the image movement predictor 6 produces a predicted movement signal Sp which predicts the image in the next field. An image pick-up device controller 8 is provided for producing a first reading address signal Sb based on the predicted movement signal Sp. The reading address signal Sb defines the address for reading the image signals from the image pick-up device 1 to out put the video signal Svb having the number of pixels that can be stored by the field memory 4.

The difference vector integrator 7 integrates the detected difference vectors Sm transferred from the image movement detector 5, and produces an integrated difference vector signal Smi which will be transferred to a field memory controller 9 and an image interpolator 10.

The field memory controller 9 produces a second reading address signal Sc based on the signal Smi. The second reading address signal Sc defines the address for reading the image signal from the field memory 4 to output a video signal Svc having the number of pixels required in the final video output to the interpolator 10.

The interpolator 10 interpolates the video signal Svc using an interpolation coefficient determined by the integrated difference vector signal Smi and outputs the resultants as the final video signal Svc'.

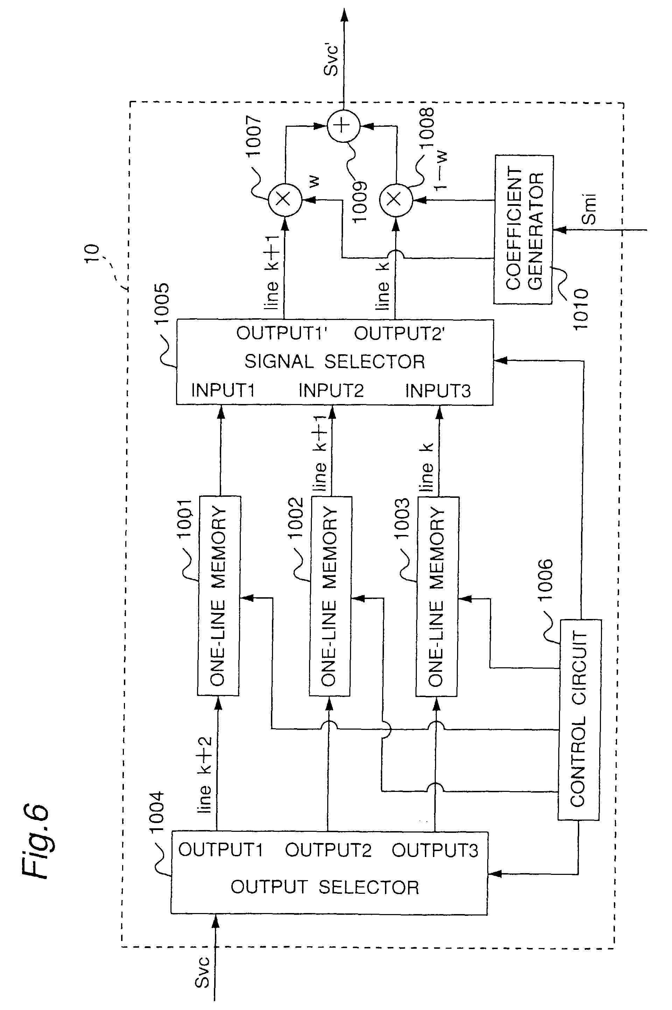

It is to be noted that the image movement detector 5 may be constructed as described by K. Uomori, et al., in "Automatic Image Stabilizing System by Full-Digital Signal Processing" (IEEE Transactions on Consumer Electronics, Vol. 36, No. 3, August 1990 (pp. 510 - 519)), and further detailed description is therefore omitted below. The detection precision of the detected difference vector signal Sm in this embodiment is better than one pixel horizontally and one line vertically, which will be described later with reference to Fig. 6.

In addition, the image pick-up device controller 8 may be constructed as described by T. Kinugasa, et al., in "Electronic Image Stabilizer for Video Camera Use" (IEEE Transactions on Consumer Electronics, Vol. 36, No. 3, August 1990 (pp. 520 - 525)), and further detailed description is therefore omitted.

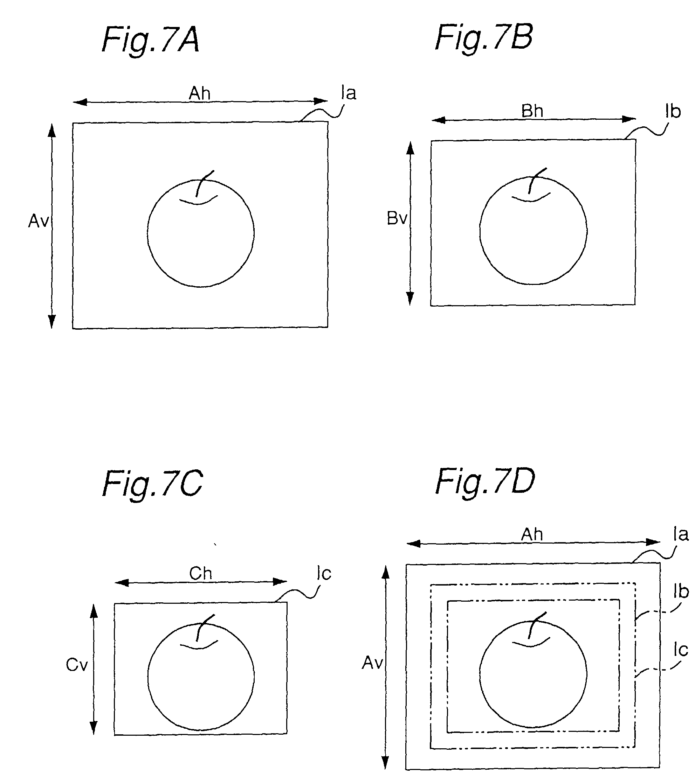

Referring to Figs. 7A, 7B, and 7C, the images Ia, Ib, and Ic obtained in the pick-up device 1, the field memory 4, and the final output image, respectively, are illustrated. Fig. 7D shows all images Ia, Ib, and Ic as superimposed. As shown in Fig. 7A, the picked up image Ia in the image pick-up device 1 is represented by the image matrix having the number Ah of pixels horizontally and the number Av of lines vertically. Similarly, the images Ib and Ic are represented by the matrix having the number Bh of pixels and the number Bv of vertical lines and the matrix having the number Ch of pixels and the number Cv of lines, respectively. As shown in Fig. 7D, the relationship between the number of pixels Ah, Bh, and Ch and the number of lines Av, Bv, and Cv is defined by the following equations.

$$Ah > Bh > Ch \qquad (1).$$

$$Av > Bv > Cv \qquad (2).$$

$$(Ah \times Av) > (Bh \times Bv) > (Ch \times Cv) \qquad (3).$$

For example, to obtain a final output image Ic with a horizontal resolution of approximately 400 TV lines assuming values of Ch = 670 pixels and Cv = 242 lines, Bh and Bv are values larger than Ch and Cv, respectively, e.g., Bh = 720 pixels and Bv = 250 lines. Ah and Av are values larger than Bh and Bv, respectively, e.g., Ah = 800 pixels and Av = 300 lines. Av is the number of vertical lines in the image pick-up device 1. Bv is the number of lines in the video signal Svb output therefrom. It is to be noted that Av does not necessarily conform to the number of photodiode cells in the vertical direction of the pick-up device 1.

When first reading the video signal Svb from the image pick-up device 1 for the image movement prediction, the area equivalent to the matrix of pixels (Bh x Bv) for representing the image Ib in the field memory 4 is read according to the image movement prediction. When next reading the video signal Svc from the field memory 4 for the image movement detection, the area equivalent to the matrix of pixels (Ch x Cv) required for representing the image Ic is read according to the movement of the image. As a result, an enlargement process such as an electronic zooming method is not required to obtain the final video output signal Svc. It is to be noted that if Ah, Bh, and Ch, and Av, Bv, and Cv are respectively equal values such that Ah = Bh = Ch and Av = Bv = Cv are satisfied, the image frame will be reduced each time the video signals Svb and Svc are read for the image movement compensation. In this case, an enlargement process such as an electric zooming will be required, resulting in the deterioration of the image.

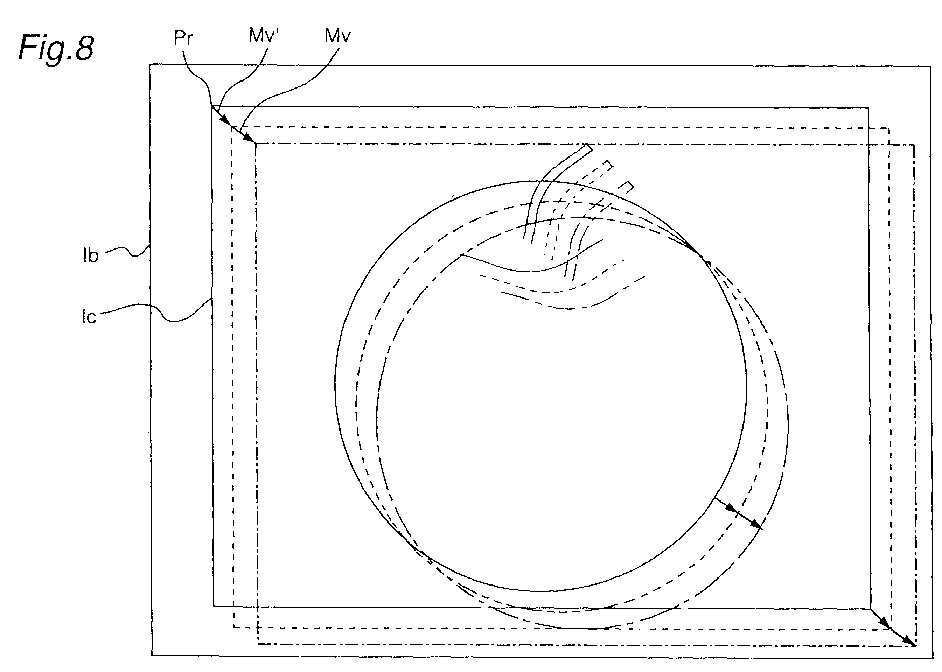

Referring to Fig. 8, a simulation used to describe reading the video signal from the field memory 4 is shown. When there is no image movement, the video signal Svc corresponding to the image Ic indicated by a solid line is read from the center part, for example, of the image Ib stored to the field memory 4. In this case the image is read from the reading start point Pr at the top left corner of the image Ic.

When the image Ic moves diagonally right direction as shown by a vector Mv', this movement is detected. To compensate this movement, the reading start position Pr is shifted according to the detected movement vector Mv'.

Similarly, when the image Ic further currently moves as shown by vector Mv, the reading start position is further shifted according to the detected movement vector Mv.

The movement of image indicated by movement vector Mv here can be detected as the detected difference vector signal Sm in this embodiment, as described in the above. Then, the video signal read position is shifted, reference to the starting position Pr of the read area, according to the integrated value of the detected difference vector Smi. The integrated value of the detected difference vectors Sm correspond to pixels and line units in the read out image. Therefore, when the integrated value is an integer, the image having an outline expressed by pixels can be read out. However, when the integrated value is decimal value, the image having an outline fallen between pixels or lines shall be read out. For this purpose, the present invention provides an image interpolator, whose detailed construction will be described later.

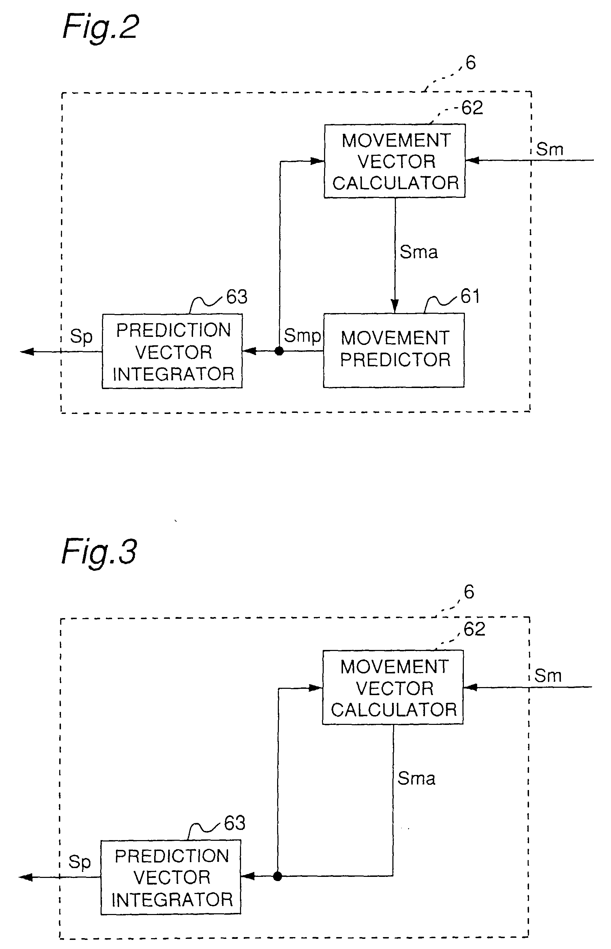

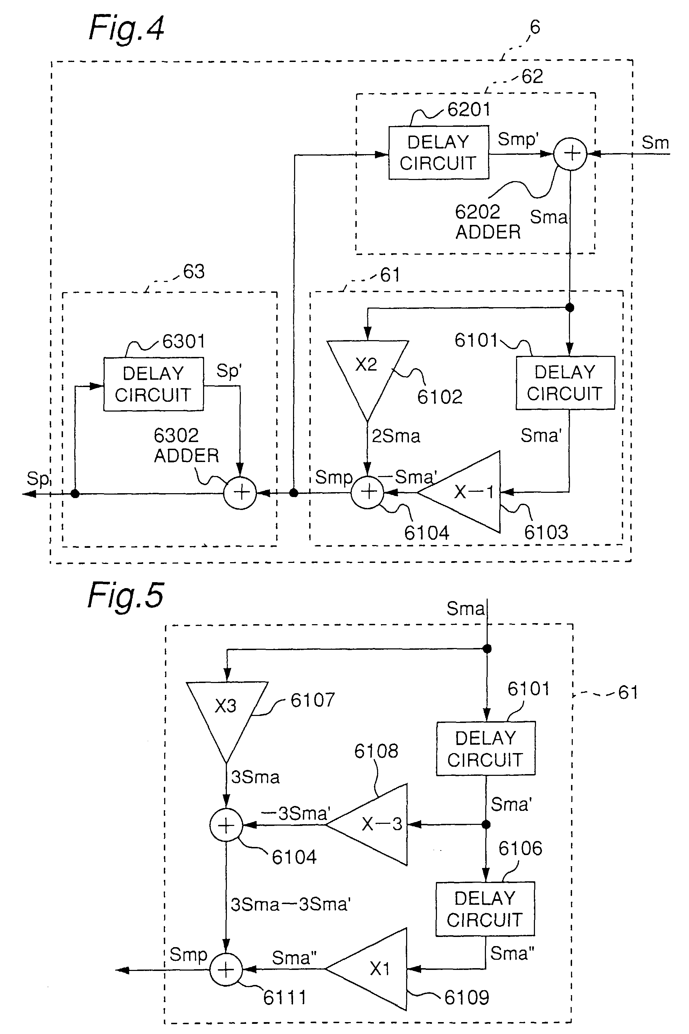

Referring to Fig. 2, the image movement predictor 6 of Fig. 1 is shown. The image movement predictor 6 includes a movement vector calculator 62 for producing an actual movement vector signal Sma representing the actual movement of the image based on the detected difference vector signal Sm. A movement predictor 61 produces a prediction movement vector signal Smp based on the predicted movement signal Sma. This signal Smp is transferred to a prediction vector integrator 63 and, at the same time, is returned to the movement vector calculator 62. The prediction vector integrator 63 produces the predicted movement signal Sp by integrating the prediction movement signal Smp. The operation of the image movement predictor 6 will be described later with reference to Fig. 4.

Referring to Fig. 3, a modification of the image movement predictor 6 is shown. In this modification, the movement predictor 61 is removed from the image movement predictor 6 of Fig. 2. As a result, the actual movement vector signal Sma is directly transferred to the prediction vector integrator 63, and is returned to the movement vector calculator 62. The operation of the image movement predictor 6 thus formed is described later.

Referring to Fig. 4, the image movement predictor 6 of Fig. 2 is shown. The movement predictor 61 has a first multiplier 6102 which multiplies the actual movement vector signal Sma by two and outputs thus multiplied movement vector signal 2Sma to an adder 6104. The movement predictor 61 further has a delay circuit 6101 for delaying the actual movement vector signal Sma by a delay period equal to one field of the video signal, i.e., 1/60 second, and for producing a delayed actual movement vector signal Sma'. A second multiplier 6103 is provided for multiplying the delayed actual movement vector signal Sma' by -1 and transferring the negative and delayed actual movement vector signal -Sma' to the adder 6104. The adder 6104 adds these signals 2Sma and -Sma' and produces the predicted motion vector signal Smp. Therefore, the movement predicted movement vector signal Smp can be expressed by the equation of

$$Smp = 2Sma - Sma' \qquad (4).$$

This predicted movement vector signal Smp is output to the movement vector calculator 62 and the prediction vector integrator 63, as described previously.

The movement vector calculator 62 has a delay circuit 6201 which delays the predicted movement vector signal Smp for a delay period equal to one field of the video signal, i.e., 1/60 second, to produce a delayed predicted movement vector signal Smp'. An adder 6202 adds this delayed predicted movement vector signal Smp' to the detected difference vector signal Sm coming from the image movement detector 5. The resulting actual movement vector Sma is output to the movement predictor 61 which uses this vector signal Sma to generate and output the predicted movement vector signal Smp in a feedback loop to the movement vector calculator 62, as show in Fig. 4.

The prediction vector integrator 63 has a delay circuit 6301 for delaying the signal input thereto for a delay period equal to one field of the video signal, i.e., 1/60 second. An adder 6302 is provided for adding the signal output from the delay circuit 6301 to the predicted movement vector signal Smp and produces an integrated predicted movement vector signal Sp. The delay circuit 6301 produces the delayed integrated predicted movement vector signal Sp'. The adder 6302 and delay circuit 6301 thus form a feedback loop whereby the predicted movement vectors signal Smp are integrated each field to generate the integrated predicted movement vector signal Sp. It is to be noted that this integrated signal Sp is also the movement prediction signal and is transferred to the image pick-up device controller 8, as described previously.

Referring to Fig. 5, an alternation of the movement predictor 61 is shown. This alternative movement predictor 61 has two delay circuits 6101 and 6106 for delaying the actual movement vectors by a delay period is equal to one field of the video signal, i.e., 1/60 second. The first delay circuit 6101 delays the actual movement vector signal Sma from the movement vector calculator 62 and produces the delayed actual movement vector signal Sma'. The second delay circuit 6106 further delays this delayed signal Sma' and produces the twice delayed actual movement vector signal Sma".

Three multipliers 6107, 6108, and 6109; and two adders 6104 and 6111 are further provided. The first multiplier 6107 multiplies the actual movement vector Sma from the movement vector 62 by 3 and outputs this tripled signal 3Sma to the first adder 6104. The second multiplier 6108 multiplies the delayed actual movement vector signal Sma' by - 3 and outputs this negative-tripled signal -3Sma' to the first adder 6104. The third multiplier 6109 multiplies the twice delayed actual movement vector signal Sma" by 1 and outputs the resulted signal Sma" to the second adder 6111.

The first adder 6104 adds the signals from the first and second multipliers 6107 and 6108, and outputs to added signal expressed as 3(Sma - Sma') to the second adder 6111. The second adder 6111 adds the signal Sma" to the added signal 3(Sma - Sma') and produces the predicted movement signal Smp. Therefore, the movement predicted movement vector signal Smp, according to the alternative movement predictor 61, can be expressed by the equation of

$$Smp = 3(Sma - Sma') + Sma'' \qquad (5).$$

The operation of thus constructed movement predictor 61 will be described later.

Referring to Fig. 6, the image interpolator 10 of Fig. 1 is shown. In this Figure, only the part for interpolating in the vertical direction is shown, for the sake of brevity. The image interpolator 10 has an output selector 1004; three one-line memories 1001, 1002, and 1003; a signal selector 1005; a control circuit 1006; two multipliers 1007 and 1008; an adder 1009; and a coefficient generator 1010.

The output selector 1004 has two input ports each connected to the field memory 4 for receiving the video signal Svc therefrom and to the control circuit 1006 for receiving a control signal therefrom, respectively. The output selector 1004 further has three output ports OUTPUT 1, OUTPUT 2, and OUTPUT 3 connected to an input port of one-line memories 1001, 1002, and 1003. Each of the one-line memory devices 1001, 1002, and 1003 is capable of storing one horizontal scan line of the video signal Svc. At any given time, one of the three one-line memories 1001, 1002, and 1003 is used for writing, and two are used for reading. The output selector 1004 sequentially outputs the video signal Svc, which is output one line at a time from the field memory 4, one line at a time to the one-line memories 1001, 1002, and 1003.

The signal selector 1005 has three input ports INPUT 1, INPUT 2, and INPUT 3 connected to an output port of one-line memories 1001, 1002, and 1003. The control circuit 1006 has five output ports each connected to the output selector 1004, one-line memories 1001, 1002, and 1003, and the signal sector 1005. Thus, the control circuit 1006 controls the input/output selections of the output selector 1004 and signal selector 1005, as well as the read/write operation of one-line memories devices 1001, 1002, and 1003.

The signal selector 1005 further has two output ports OUTPUT 1' and OUTPUT 2' each connected to the first multiplier 1007 and the second multiplier 1008, respectively. The signal selector 1005 outputs the video signals Svc read from the two one-line memory devices not currently being written to through OUTPUT 1' and OUTPUT 2'. Of the two lines of the video signal Svc input to the signal selector 1005, the signal that is output first from the field memory 4 is output through OUTPUT 2'.

The coefficient generator 1010 has one input port for receiving the integrated difference signal Smi from the difference vector integrator 7 and produces interpolation coefficient signals W and 1 - W bases on the signal Smi. The coefficient generator further has two output ports each connected to the multipliers 1007 and 1008 for transferring the coefficient signals W and 1-W, respectively. The third adder 1009 is connected to both the first and second multipliers 1007 and 1008 for adding the signals output therefrom to produce the final video signal Svc.

By thus using one of the three one-line memory devices for writing and two for reading, and sequentially switching which one-line memory devices are used for the current read and write operations, it is possible to achieve real-time signal processing.

Multipliers 1007 and 1008 multiply the two video signal lines read from two of the three one-line memories 1001, and 1002, and 1003 by interpolation coefficients W and 1 - w, respectively. These coefficients are generated by the coefficient generator 1010 based on the output from the detected difference vector integrator 7.

The adder 1009 then adds the output signals of the multipliers 1007 and 1008 to obtain the interpolation result, which is thus output from the image interpolator 10 as the final video signal Svc'.

The operation of the image movement compensation apparatus MC thus comprised is described below.

The image movement detector 5 performs a correlation operation on the video signal of the current field obtained by the image pick-up device 1 and the video signal from the previous field, and detects any movement (the detected difference vector signal Sm) between the image fields based on the result of this correlation operation. This detected difference vector signal Sm is the difference between the image movement (predicted movement signal Smp) predicted by the image movement predictor 6 in the previous field and the actual movement (actual movement vector signal Sma) of the image in the current field. Furthermore, if the movement (predicted movement signal Smp) predicted by the image movement predictor 6 and the actual movement (actual movement vector signal Sma) are equal, the movement of the image detected by the image movement detector 5 (detected difference vector signal Sm) is zero (0).

As a result, the image movement detector 5 actually detects the error in the amount of movement predicted between the previous field and the current field rather than the actual movement between the images of the previous and current fields. Predicting the movement between the current and next fields is therefore based on the actual movement vector between the previous and current fields, and is calculated from the detected difference vector obtained by the image movement detector 5.

This actual movement vector Sma is obtained by the movement vector calculator 62 (Fig. 4) such that the predicted movement vector Smp' obtained in the previous field is added to the detected difference vector Sm obtained by the image movement detector 5 is added, as described previously with reference to Fig. 4 . The movement predictor 61 predicts the movement vector (predicted movement vector signal Smp) between the current and next fields from the actual movement vector (Sma) obtained by the movement vector calculator 62, and outputs this movement vector as the predicted movement vector (predicted movement vector signal Smp) to the prediction vector integrator 63.

When the image movement predictor 6 is configured as shown in Fig. 3, where no movement predictor 61 of Fig.2 are provide. The actual movement vector Sma between the previous and current fields obtained by the movement vector calculator 62 is used as the predicted movement vector instead of signal Smp of Fig. 2, it is possible to filter out the low frequency component of the detected image movement. Then the prediction vector integrator 63 integrates the actual movement vector Sma. Thus configured image movement predictor 6 is particularly effective for the movement prediction of such an image of object moving with a constant velocity.

When the image movement predictor 6 is configured as shown in Fig. 4, the movement predictor 61 performs the following operation. The input signal is multiplied twice by the first multiplier 6102 (signal 2Sma). The input signal Sma is delayed by the delay circuit 6101 (signal Sma') and multiplied by -1 by the second multiplier 6103 (signal -Sma'). These signals 2Sma and -Sma' are added by the adder 6104, and the summed signal 2Sma - Sma' is output as the predicted movement vector Smp. Thus configured image movement predictor 6 is useful for the movement prediction of such an image of object moving with a constant acceleration.

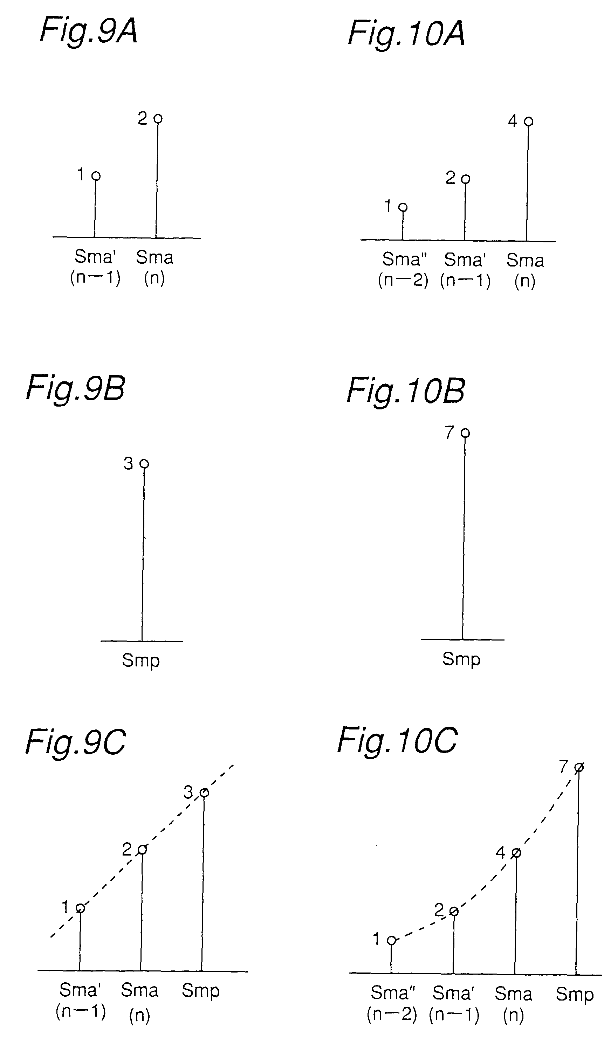

The movement prediction by thus configured movement predictor 61 of in Fig. 4 is further described below with reference to Figs. 9A, 9B, and 9C. Note that the vectors used in Figs. 9A, 9B, and 9C are expressed as one dimensional values. The actual movement vector Sma of each field input to the movement predictor 61 is expressed with (n) where 'n' is the field number. When the current field is field (n), the actual movement vector Sma of the current field has the value of 2. The delayed movement vector Sma' which is the vector Sma of the previous field has the value of 1, for example. The predicted movement vector Smp output from the movement predictor 61 in this filed will be 3. This is basically extrapolation of the input by means of a primary function based on the assumption that the change in the movement vector can be approximated using a primary function.

When the image movement predictor 6 has the movement predictor 61 which is configured as shown in Fig. 5, the input signal multiplied by 3 by the first multiplier 6107 is added by the first adder 6104 with the input signal Sma delayed by the delay circuit 6101 and multiplied by -3 by the second multiplier 6108. This sum signal is then added by the second adder 6111 with the input signal delayed by both delay circuits 6101 and 6106 and multiplied by 1 by the third multiplier 6109, and the sum signal from the second adder 6111 is output as the predicted movement vector. Thus configured image movement predictor 6 is useful for the movement prediction of such an image of object moving with a variable acceleration.

The movement prediction by thus configured movement predictor 61 is further described below with reference to Figs. 10A, 10B, and 10C. Note that the vectors used in Fig. 10 are expressed in a manner similar to that of Figs. 9A, 9B, and 9C. When the current field is field (n), the actual movement vector Sma of the current field has the value of 4, the delayed movement vector Sma' (n-1) which is the vector Sma of the previous field is 2. And, the twice delayed movement vector Sma" (n-2) which is the vector Sma of the field two fields before is 1. The predicted movement vector Sma output from the movement predictor 61 will be 7. This is basically extrapolation of the input by means of a secondary function based on the assumption that the change in the movement vector can be approximated using a secondary function.

By using the image movement predictor 6 of either the configuration shown in Fig. 4 or Fig. 5, the high frequency component of image movement can be more efficiently removed than when the actual movement vector Sma between the previous and current fields is used as the predicted movement vector Smp by the image movement predictor 6 shown in Fig. 3. It is needless to say that the image movement predictor 6 having the movement predictor 61 of Fig. 5 can be used for predicting the movement of an object moving at a constant velocity.

Using the predicted movement vector Smp thus obtained, the prediction vector integrator 63 calculates the integrated value (integrated predicted movement vector Sp) of the predicted movement vectors Smp obtained in each field. This integrated predicted movement vector Sp is output to the image pick-up device controller 8, which controls the video signal read address of the image pick-up device 1 by the first reading address signal Sb produced based on the integrated predicted movement vector Sp so as to compensate for image movement.

The detected difference vectors Sm obtained by the image movement detector 5 are also integrated by the difference vector integrator 7, and the integrated difference signal Smi is output therefrom. The difference vector integrator 7 can be constructed identically to the prediction vector integrator 63 shown in Fig. 4, and is therefore not specifically shown in the figures. The field memory controller 9 produces the second reading address signal Sc based on the integrated difference signal Smi. Therefore, by controlling the video signal read address of the field memory 4 with the second reading address signal Sc, any residual movement component left by movement prediction in the video signal Svb read from the image pick-up device 1 can be removed.

Note that this can be simply accomplished when the output (signal Smi) from the difference vector integrator 7 is an integer value, i.e., the value of a specific pixel or line. If the output (signal Smi) from the difference vector integrator 7 includes a decimal value, which is equivalent to a value indicating a position between pixels or between lines, the decimal part must be rounded because reading from the field memory 4 is only possible in pixel or line units. The precision of the movement compensation operation, and therefore the image quality, thus deteriorates. This is avoided by the interpolation process applied by the image interpolator 10 to maintain compensation precision better than one pixel or one line.

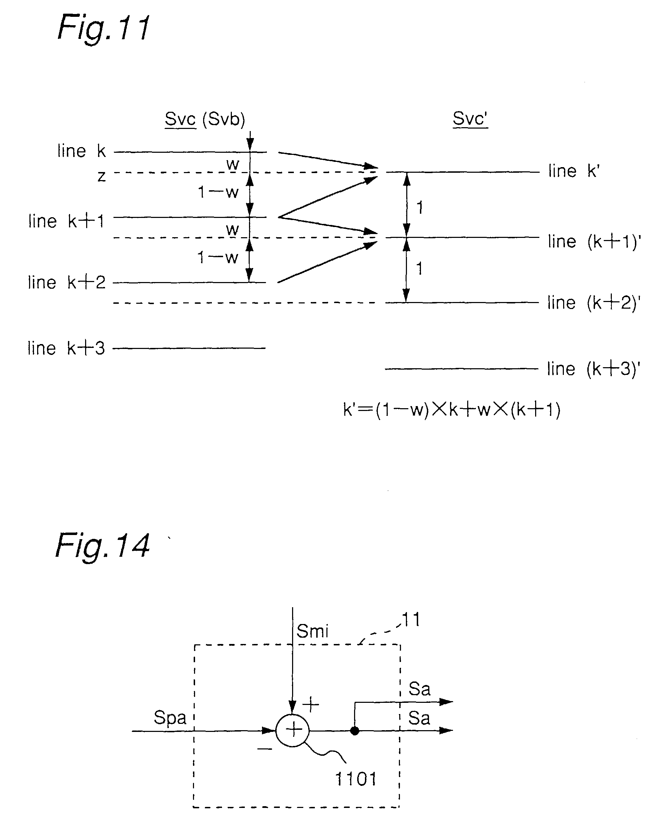

With reference to Figs. 6 and 11, he interpolation process of the image interpolator 10 is described for interpolation in the vertical direction.

Interpolation is not required when an integer value (signal Smi) is output from the difference vector integrator 7 in a given field. This is because an integer value indicates a line position, and it is therefore possible to simply read the video signal from the line determined by the signal Smi output from the difference vector integrator 7.

However, when this output value contains a decimal part, it is necessary to start reading from a position z between lines k and (k + 1) of the video signal Svb stored to the field memory 4 as shown in Fig. 11. But because reading from the field memory 4 is only possible in line units, it is not possible to read from position z. Therefore, the video signal Svc is read from the field memory 4 is read from the position z, as shown in Fig. 11. Without the image interpolator 10, it is necessary in this case to round the decimal part, begin reading from line k or (k + 1), and use the read image Svc as the final output image Svc'. In this case compensation precision will deteriorate by an amount equivalent to the decimal part that was rounded.

This problem can be eliminated, however, by the image interpolator 10 shown in Fig. 6 synthesizing the line at position z by interpolation as described bellow. It is assumed below that position z is between lines k and (k + 1) of a given field in the video signal stored in the field memory 4 (the distance between lines being 1). The ratio of the distance from position z to line k and from position z to line (k + 1) is w:(1 - w), where $0 \leq w \leq 1$, as shown in Fig. 11. To interpolate the image line at this position z, the field memory controller 9 sets the line from which reading from the field memory 4 starts based on the output from the difference vector integrator 7 (line k in this example), and reading begins.

The video signals Svc read from line k are sequentially input to the image interpolator 10 and stored in one of line memories 1001, 1002, and 1003. It is here assumed that line k is stored to line memory 1003 and line (k + 1) is stored to line memory 1002. As described above, the signal selector 1005 thus outputs the line k signal which was read first from OUTPUT 2, and the line (k + 1) signal from OUTPUT 1. The interpolation coefficients are generated by the coefficient generator 1010 based on the signal Smi, and are input to the multipliers 1007 and 1008. The line k signal is thus multiplied by interpolation coefficient (1 - w), where w is the decimal part of the output of the detected difference vector integrator 7. The line (k + 1) signal is multiplied by interpolation coefficient w, and the results are added by the adder 1009 to obtain the interpolated video signal Svc'.

The interpolated video signal Svc' is thus obtained by reading lines k and (k + 1) from two one-line memory devices, multiplying each by parameters (w and (1 - w) in this case) determined by a coefficient according to the distance of the interpolated line from the read lines, and adding the resulting products, as shown in Fig. 6.

It is therefore possible to achieve high precision movement compensation by means of an image movement compensation apparatus MC, as described above when compensating for image movement introduced to a recorded image by camera movement. This is specifically possible by providing the image pick-up device 1 having more pixels than a conventional pick-up device of which the number of pixels is determined according to the broadcast system or the system operating clock; the field memory 4 with a pixel storage capacity greater than the number of pixels required for the final video output; the image movement predictor 6 for predicting the movement from the current field to the next image; and the image interpolator 10 for interpolating the video signal.

With this configuration, image movement is compensated for by the image movement predictor 6 predicting the amount of image movement in the next field and shifting the video signal read address of the image pick-up device 1. The video signal Svb is then read from the field memory 4 based on the integrated value Sp of the detected difference vectors Sm obtained by the image movement detector 5, and interpolated by the image interpolator 10 to achieve movement compensation precision better than one pixel or one line. The detected difference vector Sm is equivalent to the residual image movement that could not be completely removed by predictive offsetting of the image pick-up device read address. This process eliminates the need for image enlargement (electronic zooming) of the video signal after movement compensation as required by conventional processes, and thus also prevents the image deterioration accompanying this image enlargement (electronic zooming) process.

It will also be obvious that the above circuit functions can be achieved in software alone.

In addition, the image movement detector 5 and image pick-up device drive controller 8 are as in the prior art, but shall not be so limited.

The movement predictor 61 is also described as being one of three different configurations shown in Figs. 3, 4, and 5, but shall not be so limited and can use a method of appropriately selecting the output of any of these three configurations. In addition, while two adders are used in the second configuration of the movement predictor 61 of Fig. 5, it will be obvious that the same configuration can be achieved using only one adder.

Image movement detection and prediction are also executed on a per field basis in the above embodiment, but the invention shall not be so limited. These operations can, for example, also be applied each frame instead of each field.

The number of vertical lines of the pick-up device 1 in Figs. 7A, 7B, 7C, and 7D is defined as Av above, but this is specifically the number of lines in the video signal obtained from the image pick-up device, and will obviously not necessarily match the number of photodiode cells on the vertical axis of the image pick-up device.

Furthermore, while the interpolation process in the horizontal direction is not specifically described in the above embodiment, an identical interpolation process can be achieved by substituting one pixel memory devices for the one line memory devices in Fig. 6, and controlling video signal read/write operations on a pixel unit basis. Just as one example for this purpose, one line memories in Fig. 6 are replaced by one pixel memories.

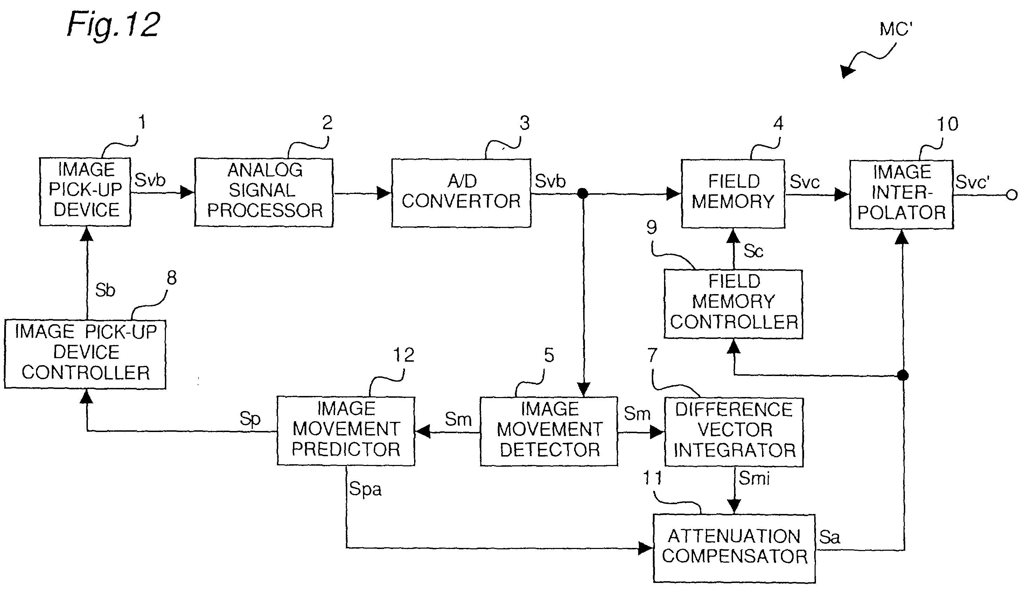

Referring to Fig. 12, an image movement compensation apparatus according to a second embodiment of the present invention is shown. The differences between the apparatus MC of Fig. 1 and the apparatus MC' of Fig 12 are described below.

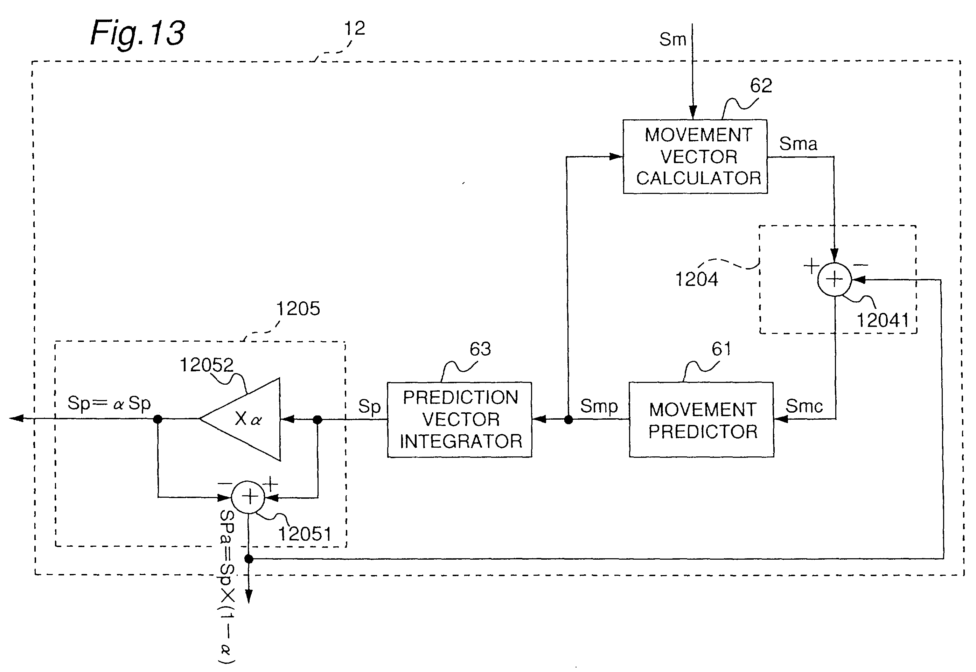

When compared with the apparatus MC, the apparatus MC' is further provided with a first attenuation compensator circuit 11, as shown in Fig. 12. Furthermore, the image movement predictor 6 of the apparatus MC is replaced by an image movement predictor 12 additionally provided with a second attenuation compensator 1204 and an attenuator 1205 in the apparatus MC', as shown in Fig. 13.

As a result, the signal Smi supplied from the difference vector integrator 7 to the field memory controller 9 and the image interpolator 10 in the apparatus MC is changed to go through the attenuation compensator 11. But, the operations of the field memory controller 9 and the image interpolator 10 remain as described in the first embodiment.

Furthermore, the signal Sma supplied from the movement vector calculator 62 to the movement predictor 61 in the first embodiment (Fig. 2 is changed to go through the second attenuation compensator 1204. Note that the movement vector calculator 62 and the movement predictor 61 operate the same in the first embodiment, respectively. And the signal Sp supplied form the prediction vector integrator 63 (the image movement predictor 6) to the image pick-up device controller 8 is changed to go though the attenuator 1205.

Further description of components having the same operation and effect in the second embodiment as in the first embodiment is omitted below. Only the differences from the first embodiment are described.

As shown in Fig. 13, the attenuator 1205 has an multiplier 12052 and an adder 12051 connected to each other. The signal Sp from the prediction vector integrator 63 is input to the multiplier 12052 and the adder 12051. The multiplier 12052 multiplies the signal Sp with an attenuation coefficient $\alpha$, where $0 \leq \alpha < 1$, and outputs the resultant $\alpha$Sp to the image pick-up device controller 8 and the adder 12051. The adder 12051 reduce this resultant signal $\alpha$Sp from the signal Sp and produces an attenuation signal Spa representing the attenuation level of this process(Spa=Sp(1-$\alpha$)). This attenuation signal Spa is transferred to the first attenuation compensator 11 and the second compensator 1204.

The second attenuation compensator 1204 has the adder 12041 which adds the input Sma from the movement vector calculator 62 and the inverse of the output Spa from the attenuator 1205, and outputs the result Smc to the movement predictor 61.

This attenuation process is used to assure sufficient suppression of image movement and movement compensation over a sufficiently broad area when image movement compensation is applied. This process is described in detail in "Fluctuation stabilizing apparatus," United States patent number 5099323 issued March 24, 1993 to Morimura et al. Therefore, further description is omitted. As shown in Fig. 14, the first attenuation compensator 11 has an adder 1101 for attenuating the signal Smi from the difference vector integrator 7 by an amount determined by and the signal Spa from the image movement predictor 12. The first attenuation compensator circuit 11 outputs the signal Sa having an attenuated integrated value to the field memory controller 9 and to the image interpolator 10.

In operation, the attenuator 1205 attenuates the integrated value (integrated predicted movement vectors Sp) integrated by the prediction vector integrator 63, i. e., effectively reduces the movement compensation. As a result, the image movement component left in the video signal Svb read from the image pick-up device 1 increases. It must be noted, however, that this residual image movement component in the video signal Svb from the image pick-up device 1 is detected by the image movement detector 5. Furthermore, this residual image movement component is removed by the video signal read operations from the field memory 4 and the interpolation process of the image interpolator 10. As a result, the effect of deliberately reducing movement compensation by this attenuation process does not appear in the final output image (signal Svc'). Therefore, this deliberate reduction in compensation (attenuation $\alpha$ of the integrated predicted movement vector Sp) by the attenuator 1205 when the video signal Svb is read from the image pick-up device 1 is removed from the output Smi of the difference vector integrator 7 by the first attenuation compensator 11.

In addition, because uncompensated movement components resulting from this deliberate attenuation process are contained in the detected difference vector Sm detected by the image movement detector 5 in addition to the normal error of the movement prediction process, there is a difference between the inter-field image movement calculated by the movement vector calculator 61 and the actual image movement, and the precision of the predicted movement is impaired.

By means of the present embodiments described above, attenuation of the integrated predicted movement vector Sp, which is used to sufficiently suppress image movement and enable movement compensation over a broad area, can be used during image movement compensation without impairing the effectiveness of the attenuation or the precision of image movement compensation.

It is to be noted that the present embodiment has been described using the first attenuation compensator 11 and second attenuation compensator 1204 as discrete components, but the invention shall not be so limited and it is possible to combine these into a single attenuation compensator circuit.

Furthermore, the attenuation coefficient $\alpha$ is described as a constant value above, but shall not be so limited and may, for example, be variable according to the magnitude of the integrated predicted movement vector Sp.

It will also be obvious that the above functions can be achieved in software alone.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An image movement compensation apparatus (MC) for compensating the movement of an image representing an object, said apparatus comprising:

   a video signal producing means (1) for producing a first image (Ia) of said object expressed by a first predetermined number (Ah x Av) of pixels and reading out a second image (Ib) from said first image (Ia) to produce a first video signal (Svb), said second image (Ib) being expressed by a second predetermined number (Bh x Bv) smaller than said first predetermined number (Ah x Av) of pixels;
   a memory means (4) for storing said first video signal (Svb);
   an image movement detecting means (5) for detecting the movement of said second image (Ib) at intervals of a predetermined period and producing a movement vector signal (Sm);
   a first control means (9) for controlling said memory means (4) to read out a third image (Ic) from said second image (Ib) and producing a second video signal (Svc), said third image (Ic) being expressed by a third predetermined number (Ch x Cv) smaller than said second predetermined number (Bh x Bv) of pixels; and
   a second control means (8) for controlling said image signal producing means (1) to change the address from which said second image (Ib) is read out;

   characterized in that said apparatus further comprises:

   an integrating means (7) for integrating said movement vector signal (Sm) and producing an integrated movement vector signal (Smi); and
   an image movement prediction means (6) for predicting the movement of said first image (Ia) at intervals of said predetermined period based on said movement vector signal (Sm) and producing a movement prediction signal (Sp);
   said first control means (9) reading out said third image (Ic) from said second image (Ib) based on said integrated movement vector signal (Smi); and
   said second control means (8) changing the address from which said second image (Ib) are read out based on said movement prediction signal (Sp).

2. An image movement compensation apparatus (MC) as claimed in Claim 1, characterized in that said image movement prediction means (6) comprises:

   a movement vector prediction signal means (62 and 61) for producing a prediction vector signal (Smp) predicting a movement of said first image (Ia) after one of said predetermined period (field or frame); and
   a prediction vector integrating means (63) for integrating said prediction vector signal (Smp) to produce said movement prediction signal (Sp).

3. An image movement compensation apparatus (MC) as claimed in Claim 2, characterized in that said movement vector prediction signal means (62 and 61) produces said prediction vector signal (Smp), based on said movement vector (Sm) and a delayed prediction vector signal (Smp') which is the same as said prediction vector signal (Smp) before a single of said predetermined period (field or frame).

4. An image movement compensation apparatus (MC) as claimed in Claim 3, characterized in that said predetermined period is a field.

5. An image movement compensation apparatus (MC) as claimed in Claim 3, characterized in that said predetermined period is a frame.

6. An image movement compensation apparatus (MC) as claimed in Claim 1, characterized by an interpolating means (10) for interpolating said second video signal (Svc) based on said integrated movement vector signal (Smi) and producing a third video signal (Svc') representing a fourth image, whereby when said integrated movement signal (Sm) has a decimal value, the outline of said fourth image fallen between pixels are expressed by pixels interpolated according to the pixels opposite sides with respect to said outline.

7. An image movement compensation apparatus (MC') as claimed in Claim 1, characterized by:

an attenuating means (1205) for attenuating said movement prediction signal (Sp) to produce an attenuation movement prediction signal (Spa); and
a reducing means (11) for reducing said integrated vector signal (Smi) by said attenuation movement signal (Spa) to produce an attenuated vector signal (Sa).

**Patentansprüche**

1. Bildbewegungskompensationsvorrichtung (MC) zur Kompensation der Bewegung eines Bildes, das ein Objekt repräsentiert, die enthält:

eine Videosignalerzeugungseinrichtung (1) zur Erzeugung eines ersten Bildes (Ia) des Objektes, das durch eine erste vorbestimmte Anzahl (Ah x Av) von Pixeln ausgedrückt ist und zum Auslesen eines zweiten Bildes (Ib) von dem ersten Bild (Ia) zur Erzeugung eines ersten Videosignals (Svb), wobei das zweite Bild (Ib) ausgedrückt wird durch eine zweite vorbestimmte Anzahl (Bh x Bv) von Pixeln, die kleiner als die erste vorbestimmte Anzahl (Ah x Av) von Pixeln ist;
ein Speichermittel (4) zur Speicherung des ersten Videosignals (Svb);
ein Bildbewegungserfassungsmittel (5) zur Erfassung der Bewegung des zweiten Bildes (Ib) in Intervallen einer vorbestimmten Zeitspanne und zur Erzeugung eines Bewegungsvektorsignals (Sm);
ein erstes Steuermittel (9) zur Steuerung des Speichermittels (4) zum Auslesen eines dritten Bildes (Ic) von dem zweiten Bild (Ib) und Erzeugung eines zweiten Videosignals (Svc), wobei das dritte Bild (Ic) ausgedrückt wird durch eine dritte vorbestimmte Anzahl (Ch x Cv) von Pixeln, die kleiner als die zweite vorbestimmte Anzahl (Bh x Bv) von Pixeln ist; und
ein zweites Steuermittel (8) zur Steuerung des Bildsignalerzeugungsmittels (1), um die Adresse zu verändern, an der das zweite Bild (Ib) ausgelesen wird;

dadurch gekennzeichnet, daß die Vorrichtung weiterhin enthält:

ein Integrationsmittel (7) zur Integration des Bewegungsvektorsignals (Sm) und Erzeugung eines integrierten Bewegungsvektorsignals (Smi); und
ein Bildbewegungsvorhersagemittel (6) zur Vorhersage der Bewegung des ersten Bildes (Ia) in Intervallen einer vorbestimmten Zeitspanne basierend auf dem Bewegungsvektorsignal (Sm) und zum Erzeugen eines Bewegungsvorhersagesignals (Sp);
wobei das erste Steuermittel (9) das dritte Bild (Ic) von dem zweiten Bild (Ib) basierend auf dem integrierten Bewegungsvektorsignal (Smi) ausliest; und
das zweite Steuermittel (8) die Adresse, von der das zweite Bild (Ib) ausgelesen wird basierend auf dem Bewegungsvorhersagesignal (Sp) verändert.

2. Bildbewegungskompensationsvorrichtung (MC) nach Anspruch 1,
dadurch gekennzeichnet, daß das Bildbewegungsvorhersagemittel (6) enthält:

ein Bewegungsvektorvorhersagesignalmittel (62 und 61) zur Erzeugung eines Vorhersagevektorsignals (Smp), das eine Bewegung des ersten Bildes (Ia) nach einer der vorbestimmten Perioden (Halbbild oder Vollbild) erzeugt; und
ein Vorhersagevektorintegrationsmittel (63) zur Integration des Vorhersagesektorsignals (Smp) zur Erzeugung des Bewegungsvorhersagesignals (Sp).

3. Bildbewegungskompensationsvorrichtung (MC) nach Anspruch 2,
dadurch gekennzeichnet, daß das Bewegungsvektorvorhersagesignalmittel (62 und 61) das Vorhersagevektorsignal (Smp) basierend auf dem Bewegungsvektor (Sm) und einem verzögerten Vorhersagevektorsignal (Smp') erzeugt, das dem Vorhersagevektorsignal (Smp) vor einer einzigen der vorbestimmten Zeitspanne (Halbbild oder Vollbild) entspricht.

4. Bildbewegungskompensationsvorrichtung (MC) nach Anspruch 3,
dadurch gekennzeichnet, daß die vorbestimmte Zeitspanne ein Halbbild beträgt.

5. Bildbewegungskompensationsvorrichtung (MC) nach Anspruch 3,
dadurch gekennzeichnet, daß die vorbestimmte Zeitspanne ein Vollbild beträgt.

6. Bildbewegungskompensationsvorrichtung (MC) nach Anspruch 1,
gekennzeichnet durch ein Interpolationsmittel (10) zur Interpolation des zweiten Videosignals (Svc) basierend auf dem integrierten Bewegungsvektorsigal (Smi) und zum Erzeugen eines dritten Videosignals (Svc'), das ein viertes Bild repräsentiert, wobei - wenn das integrierte Bewegungssignal (Sm) einen Dezimalwert besitzt - die Umrißlinie des vierten Bildes, die zwischen Pixel fällt, durch Pixel ausgedrückt wird, die gemäß den gegenüberliegenden Seiten der Pixel in bezug auf die Umrißlinie interpoliert werden.

7.  Bildbewegungskompensationsvorrichtung (MC') nach Anspruch 1, gekennzeichnet durch ein Dämpfungsmittel (1205) zur Dämpfung des Bewegungsvorhersagesignals (Sp) zur Erzeugung eines Dämpfungsbewegungsvorhersagesignals (Spa); und ein Reduziermittel (11) zur Reduzierung des integrierten Vektorsignals (Smi) durch das Dämpfungsbewegungssignal (Spa) zur Erzeugung eines gedämpften Vektorsignals (Sa).

**Revendications**

1.  Un dispositif de compensation de mouvement d'image (MC) pour compenser le mouvement d'une image représentant un objet, ledit dispositif comportant :

    un moyen de production de signal vidéo (1) pour la production d'une première image (Ia) dudit objet exprimé par un premier nombre prédéterminé (Ah x Av) de pixels et pour extraire une seconde image (Ib) de ladite première image (Ia) pour produire un premier signal vidéo (Svb), ladite seconde image (Ib) étant exprimée par un second nombre prédéterminé (Bh x Bv) plus petit que ledit premier nombre prédéterminé (Ah x Av) de pixels ;
    un moyen de mémoire (4) pour stocker ledit premier signal vidéo (Svb) ;
    un moyen de détection de mouvement d'image (5) pour détecter le mouvement de ladite seconde image (Ib) à des intervalles d'une période prédéterminée et pour produire un signal de vecteur de mouvement (Sm) ;
    un premier moyen de commande (9) pour la commande dudit moyen de mémoire (4) pour extraire une troisième image (Ic) de ladite seconde image (Ib) et pour produire un second signal vidéo (Svc), ladite troisième image (Ic) étant exprimée par un troisième nombre prédéterminé (Ch x Cv) plus petit que le second nombre prédéterminé (Bh x Bv) de pixels ; et
    un second moyen de commande (8) pour commander ledit moyen de production de signal d'image (1) pour modifier l'adresse à partir de laquelle ladite seconde image (Ib) est extraite ;

    caractérisé en ce que ledit dispositif comporte en outre :

    un moyen d'intégration (7) pour intégrer ledit signal de vecteur de mouvement (Sm) et pour produire un signal de vecteur de mouvement intégré (Smi) ; et
un moyen de prévision de mouvement d'image (6) pour prévoir le mouvement de ladite première image (Ia) à des intervalles de ladite période prédéterminée sur la base dudit signal de vecteur de mouvement (Sm) et pour produire un signal de prévision de mouvement (Sp) ;
ledit premier moyen de commande (9) extrayant ladite troisième image (Ic) de ladite seconde image (Ib) sur la base dudit signal de vecteur de mouvement intégré (Smi) ; et
ledit second moyen de commande (8) modifiant l'adresse à partir de laquelle ladite seconde image (Ib) est extraite sur la base dudit signal de prévision de mouvement (Sp).

2.  Un dispositif de compensation de mouvement d'image (MC) selon la revendication 1, caractérisé en ce que ledit moyen de prévision de mouvement d'image (6) comporte :

    un moyen de signal de prévision de vecteur de mouvement (62 et 61) pour produire un signal de vecteur de prévision (Smp) prévoyant un mouvement de ladite première image (Ia) après une de ladite période prédéterminée (champs ou trame) ; et
    un moyen d'intégration de vecteur de prévision (63) pour intégrer ledit signal de vecteur de prévision (Smp) pour produire ledit signal de prévision de mouvement (Sp).

3.  Un dispositif de compensation de mouvement d'image (MC) selon la revendication 2, caractérisé en ce que ledit moyen de signal de prévision de vecteur de mouvement (62 et 61) produit ledit signal de vecteur de prévision (Smp), sur la base dudit vecteur de mouvement (Sm) et un signal de vecteur de prévision retardé (Smp') qui est le même que ledit signal de vecteur de prévision (Smp) avant une seule de ladite période prédéterminée (champs ou trame).

4.  Un dispositif de compensation de mouvement d'image (MC) selon la revendication 3, caractérisé en ce que ladite période prédéterminée est un champs.

5.  Un dispositif de compensation de mouvement d'image (MC) selon la revendication 4, caractérisé en ce que ladite période prédéterminée est un une trame.

6.  Un dispositif de compensation de mouvement d'image (MC) selon la revendication 1, caractérisé par un moyen d'interpolation (10) pour interpoler ledit second signal vidéo (Svc) sur la base dudit signal de vecteur de mouvement intégré (Smi) et produire un troisième signal vidéo (Svc') représentant une quatrième image, ainsi, lorsque ledit signal de mouvement intégré (Sm) a une valeur décimale, les contours de ladite quatrième image tombés entre des pixels sont exprimés par des pixels interpolés selon les côtés opposés des pixels par rapport aux dits contours.

7. Un dispositif de compensation de mouvement d'image (MC') selon la revendication 1, caractérisé par :

un moyen d'atténuation (1205) pour atténuer ledit signal de prévision de mouvement (Sp) pour produire un signal de prévision de mouvement d'atténuation (Spa) ; et
un moyen de réduction (11) pour réduire ledit signal de vecteur intégré (Smi) par ledit signal de mouvement d'atténuation (Spa) pour produire un signal de vecteur atténué (Sa).

Fig.1

## Fig.2

## Fig.3

## Fig.4

## Fig.5

*Fig.6*

## Fig.7A

Ah · Ia

Av

## Fig.7B

Bh · Ib

Bv

## Fig.7C

Ch · Ic

Cv

## Fig.7D

Ah · Ia

Ib

Ic

Av

Fig.8

## Fig.9A

## Fig.10A

## Fig.9B

## Fig.10B

## Fig.9C

## Fig.10C

## Fig.11

Svc (Svb)                                   Svc'

line k ─────────────┐
        w           │
z ─────────────────────→  line k'
        1─w         │
line k+1 ───────────┤          1
        w           │
line k+2 ───────────┤          1
                    │
        1─w         │  line (k+1)'

line k+3 ───────────                line (k+2)'

                                    line (k+3)'

$$k' = (1-w) \times k + w \times (k+1)$$

## Fig.14

## Fig.12

MC'

EP 0 641 123 B1

Fig.13